# EUROPEAN PATENT SPECIFICATION

(11) **EP 2 674 411 B1**
(45) Date of publication and mention of the grant of the patent: **01.05.2019**
(21) Application number: 11715007.8
(22) Date of filing: 07.02.2011
(51) Int. Cl.: C05B 17/00, C05F 17/00

(54) **METHOD FOR OBTAINING A BIOLOGICAL FERTILIZER FROM APATITE MINERALS BY MEANS OF MICROORGANISMS AND BIOLOGICAL FERTILIZER THUS OBTAINDED**
VERFAHREN ZUR HERSTELLUNG EINES BIOLOGISCHEN DÜNGERS UND SO HERGESTELLTER BIOLOGISCHER DÜNGER
PROCÉDÉ D'OBTENTION D'UN FERTILISANT BIOLOGIQUE ET FERTILISANT BIOLOGIQUE AINSI OBTENU

(43) Date of publication of application: 18.12.2013
(73) Proprietor: FERTINAGRO BIOTECH, S.L., 44195 Teruel (ES)
(72) Inventor: ATARES REAL, Sergio, E-44195 Teruel (ES); MARQUES MASCARELL, Ramon, E-44195 Teruel (ES); MARTIN PEREZ, Julia R., E-44195 Teruel (ES); ALIGUE ALEMANY, Rosa M., E-44195 Teruel (ES)
(74) Representative: González López-Menchero, Álvaro Luis
(86) International application number: PCT/ES2011/070076
(87) International publication number: WO 2012/107603

(56) References cited:
- WO-A1-2004/035508
- AU-B2- 607 501
- GB-A- 146 351
- GB-A- 822 637
- US-A1- 2006 032 281
- US-A1- 2007 227 212
- DATABASE WPI Week 200008 Thomson Scientific, London, GB; AN 2000-097511 XP002660410, & WO 99/64374 A1 (KANNO S) 16 December 1999 (1999-12-16) & JP 3 863318 B2 (SUGANO SHINYA) 27 December 2006 (2006-12-27)

## Description

The present invention relates to a method for obtaining a biological fertilizer, and to the biological fertilizer obtained by means of said method as defined in the claims.

The method of the invention allows obtaining a biological fertilizer with phosphorus from the apatite mineral (Ca₅(PO₄)₃(F,Cl,OH)), said method allowing the solubilization of apatite, and therefore of the phosphorus contained therein, by means of using a mixture of degradable mineral raw materials which are used as a source of nitrogen, energy and minerals by phosphate-solubilizing organisms, with a high efficiency, on aluminum-calcium phosphate, preferably on aluminum-calcium rock

The biological fertilizer obtained according to the method of the invention is a product rich in available (assimilable) phosphorus and can be used as an organic amendment in farming and/or forest soils or it can be mixed with other materials to obtain an organo-mineral fertilizer (mixture or combination of mineral and organic fertilizers).

As an essential nutrient for plants, phosphorus can only be used if it is in an assimilable form. To that respect, when soluble phosphorus fertilizers are applied for the purpose of enriching the phosphorus content of the soil solution, generally the majority of it is converted into less soluble forms, being retained or fixed, the plant being able to use little of it. This phenomenon varies among the different soils and regions of the world, but where it is intense, high enough doses of phosphorus must be applied in order to saturate the fixing points of this nutrient and maintain a suitable concentration thereof in the solution of the soil or amendments which reduce the fixing capacity of phosphorus must be used (Sanchez, 1976).

Since the mid 19^{th} century, the main natural source of phosphorus for the fertilizer industry has originated from igneous and sedimentary rocks and rocks from meteorites, where it is found as crystalline apatites. These apatites are mineralized rocks and make up the mother substance and, at the same time, the original source of all the phosphates found in nature, the highest percentage of phosphorus being found in the form of tricalcium phosphate (Ca₃(PO₄)₂), containing chlorine or fluorine in the form of salts, also being able to contain a certain amount of silicic acid and, occasionally, iron, aluminum and manganese. The most common phosphorus compounds are, among others, fluorapatite ((PO₄)₂Ca₃)₃·F₂Ca, hydroxyapatite ((PO₄)₂Ca₃)₃·Ca(OH)₂ and chlorapatite ((PO₄)₂Ca₃)₃·Cl₂Ca.

These tricalcium phosphates are an insoluble form of phosphorus, therefore in order to be used as fertilizers, they need to be solubilized by chemical means (strong acids) or biological means (solubilizing microorganisms).

In order to solubilize the phosphorus of the apatite mineral present in phosphate rocks, it is typically necessary to carry out a chemical treatment, which involves a high economic cost, in addition to the possible environmental contamination, it being necessary to have determined facilities to carry out such chemical treatment. The main phosphate fertilizers obtained by means of chemical treatment are:
- Normal superphosphate or simple superphosphate. Product obtained by reacting ground mineral phosphate with sulfuric acid and which contains, as essential components, monocalcium phosphate and calcium sulfate.
- Triple superphosphate. Product obtained by reacting the ground mineral phosphate with phosphoric acid and which contains, as an essential component, monocalcium phosphate.
- Others: dephosphorization slag (Thomas phosphates, Thomas slag), partially solubilized natural phosphate, precipitated dicalcium phosphate dihydrate, calcined phosphate, aluminum-calcium phosphate, natural soft phosphate.

In addition, biological processes entail considerable energy savings compared to chemical methods and, at the same time, they are much less aggressive from the environmental point of view. In most cases, in order for these biological processes to allow obtain an efficient yield at the industrial level, it is necessary to carry out anaerobic microbial fermentation from different sources of phosphorus (see document US2008/0105018 A1 for example), making it necessary to have specific industrial facilities, such as fermentation reactors, which entail a considerable investment both in assets as well as in expensive raw materials (see patent application EP1698595 A1 for example).

The biological fermentation processes have been well known for many decades. These processes are used to ferment organic matter from different raw materials of animal or plant origin (CN101186879 A), WO2004/035508, in many cases resorting to microbial inoculation with specific microorganisms to favor said fermentation. Using the organic matter fermentation process, many authors have attempted to solubilize phosphate rock, achieving very low yields, either due to the type of rock used or due to the remaining raw materials used in composting which can intervene in said processes, resulting in an end product with almost insignificant levels of available phosphorus (approximately 472.66 mg/kg, Marcano *et al.,* 1999).

The positive effect of organic matter on the solubilization of the phosphorus of apatites of phosphate rocks (Mishra *et al.,* 1983; Subehia *et al.* 1993; Reyes *et al.,* 1991) is due to the formation of organic acids which contribute to a pH reduction. The microorganisms, as well as the humic substances, are responsible for dissolving the phosphate of the phosphate rock; the former produce organic acids and chelates during decomposition, which aid in releasing the phosphorus coming from the structure of the apatite mineral of phosphorite, and the humic acids complex the calcium of the polyphosphate, aiding in the release of the phosphate in a soluble form.

Most studies conducted in phosphorus solubilizing microorganisms have consisted of *in vitro* assays with liquid culture media specific for certain microorganisms (Gomez-Guiñán *et al.,* 2001; Reyes, 1991), and even with this adaptation, they have only allowed obtaining scarcely significant levels of solubilized phosphorus to be able to transfer these assays to an industrial level (10,153.60 mg/l, Valenzuela *et al.,* 2002).

In the state of the art there are many products containing microorganisms in their formulation, some of them being phosphorus solubilizers. These products can contain bacteria and/or fungi, there being products having a single strain or, in some cases, they contain a pool of these microorganisms. The latter are incorporated into the fertilizer together with other constituents to favor their viability and exert their action once applied to the soil (see documents CN101429059 A, WO2009070966 A1, CN101468924 A, CN101066897 A, ES 2 234 417 A1 for example).

The method of the invention allows obtaining a biological fertilizer with phosphorus from the apatite mineral (Ca₅(PO₄)₃(F,Cl,OH)), said method allowing the solubilization of the tricalcium phosphate of apatites, and therefore of the phosphorus contained therein, by means of using a mixture of degradable mineral raw materials in the form of 10%-20% aluminum-calcium phosphate rock, 5%-10% protein concentrate, 10%-30% Posidonia, 15%-25% fresh manure, 3%-5% magnesium sulfate, 3%-5% ferrous sulfate, which are used with a high efficiency as a source of nitrogen, energy and minerals by the phosphate-solubilizing organisms in the form of 10%-15% seed inoculant, and water to obtain a humidity of 25-35%, on aluminum-calcium phosphate, preferably on aluminum-calcium rock, such that the optimal environmental and nutritional conditions of those phosphate-solubilizing organisms are met.

Thus, a first object of the invention is to provide a method for obtaining a biological fertilizer with phosphorus from the apatite mineral (Ca₅(PO₄)₃(F,Cl,OH)), said method allowing the solubilization of the tricalcium phosphate of apatites, and therefore of the phosphorus contained therein, by means of using a mixture of degradable mineral raw materials which are used as a source of nitrogen, energy and minerals by the phosphate-solubilizing organisms, with a high efficiency and such that it can be transferred to an industrial scale, on aluminum-calcium phosphate, preferably on aluminum rock (mainly formed by millisite, crandallite and wavellite, containing a mean level of phosphorus of about 24% in the crude product and a large amount of aluminum), such that the optimal environmental and nutritional conditions of those phosphate-solubilizing organisms are met. In addition to resulting in a product rich in available phosphorus with a high efficiency, this method allows the cost drawbacks relating to the raw materials and from an energy point of view to be avoided, as well as minimizing the environmental problems derived from the of the methods known in the current state of the art.

Another object of the present invention is the biological fertilizer obtained by means of the mentioned method, which fertilizer contains a high proportion of available phosphorus suitable for its use as an organic amendment in farming and forest soils and/or for being mixed with other materials for the purpose of obtaining an organo-mineral fertilizer.

The method of the invention is based on the biological aerobic fermentation process whereby the phosphorus of apatites and of the soil is solubilized, with greater activity on the aluminum-calcium phosphate rock, by means of using phosphorus-solubilizing microorganisms with many important advantages, for example economic savings, environmental conservation, and it allows obtaining a new biological product which increases the assimilable phosphorus for the plant from the fertilizer itself and from the soil, together with other benefits provided by the microorganisms, such as to increase nitrogen fixation in the in the plant, to enhance the production of siderophores, antibiotics and other plant growth stimulating substances.

A biological fertilizer or biofertilizer is thus obtained with part of the phosphorus of the apatite already solubilized during composting prior to obtaining the end product, but with an added value, which is the content of a certain number of these microorganisms or their resistance forms, which are capable of creating symbiosis with plant roots, further favoring the survival and multiplication thereof. Therefore, both the phosphorus provided by the fertilizer and the phosphorus present in the soil will be available for the plant in a manner similar to a slow release, because the symbiosis created between the roots and the microorganisms makes it determine when the action of these microorganisms on the phosphate should increase in order to solubilize it and, accordingly, be available for the plant.

According to the method for obtaining a biological fertilizer, said method comprises the following steps:
i) Obtaining a homogenous mixture from aluminum-calcium phosphate rock powder to which a protein concentrate, posidonia, fresh manure, magnesium sulfate and ferrous sulfate are added as degradable mineral raw materials which are a source of nitrogen, energy and minerals for the phosphate-solubilizing organisms, as well as the phosphate-solubilizing organisms themselves as a seed inoculant, in addition to the water necessary for achieving humidity of 25-35%. The temperature both during the mixing process and of the mixture itself is maintained below 42°C. The homogenous mixture of i) including 10%-20% aluminum-calcium phosphate rock, 5%-10% protein concentrate, 10%-30% posidonia, 15%-25% fresh manure, 3%-5% magnesium sulfate, 3%-5% ferrous sulfate, as well as 10%-15% of phosphate-solubilizing organisms seed inoculant.
ii) Turning over the mixture obtained in i) for the purpose of maintaining the aerobic and temperature conditions, less than 42°C, which favors the activity of the mesophilic bacteria. These turnovers allow the provision of oxygen to the mixture (minimum oxygen contained in the mixture 5%) to favor the development of aerobic fermentation as well as to cool the mixture; so the periodicity of said turnovers will depend on the aforementioned temperature and oxygen conditions.
iii) The mixture is maintained under the conditions mentioned in i) and ii) for a period of 90-120 days, depending on the desired phosphorus solubilization percentage. In this time period, the microorganisms present in the mixture and under the aforementioned conditions can solubilize 20-25% of the phosphorus of the apatite mineral. For this reason, the mixture must be protected under a suitable cover and be carried out on a surface which prevents ponding due to rain water, for example, or contamination by other agents present in the medium.
iv) If necessary, the water necessary for maintaining a constant humidity of 25-35% is added to the mixture during the composting process described above.
v) At the end of the composting process, the temperature of the mixture is allowed to increase to a temperature greater than 65°C for at least 1 hour to remove possible pathogenic germs suppressing the turnovers.
vi) Finally, the obtained product is sieved for its subsequent use forming part of another fertilizer, is formed into pellets or is used directly.

As has been described above in step i), the temperature of the homogenous mixture is maintained, by means of turnover, below 42°C, preferably at a temperature between 37 and 42°C. Likewise, the pH of the mixture ranges between 6-9, preferably between 7.2-8.

Optionally, or in addition to the use of manure in the mixture i), purines and/or other sludge or primary waste from urban or farming waste can be used as nutrients for the phosphate-solubilizing organisms.

Additionally, other components can be incorporated in the mixture i), such as structured carbohydrates, for example cellulose, lignin and pectin, and it can also include, either due to the materials already mentioned in i) or as additional mineral components, CaCO₃, Fe (III), NaCl, Na₂CO₃, Na₂SO₄, CaCl₂, MgCl₂, KC1, KBr, SrCl₂, H₃BO₃, (NH₄)NO₃, NB₂HPO₄, (NH₄)₂SO₄, MgSO₄·7H₂O, MnSO₄·H₂O, FeSO₄·7H₂O.

According to a preferred embodiment of the method of the invention, the mixture mentioned in i) preferably includes at least 5 g of protein concentrate / 100 g of product to be composted.

Unless otherwise expressly stated, the percentages included in the present application relate to percentages by weight.

According to another preferred embodiment of the method of the invention, the mixture of materials i) includes, for every 100 g of product to be composted, at least 5 g of cellulose, 10 g of fiber in the form of lignin and pectin, 0.2 g of CaCO₃, 0.016 g of Na₂CO₃, 0.01 g of Fe (III), 2 g of NaCl, 0.016 g of Na₂CO₃, 0.32 g of Na₂SO₄, 0.180 g of CaCl₂, 0.088 g of MgCl₂, 0.055 g of KCl, 0.008 g of KBr, 3.4.10⁻³ g of SrCl₂, 2.2.10⁻³ g of H₃BO₃, 0.16.10⁻³ g of (NH₄)NO₃, 0.8.10⁻³ g of NB₂HPO₄, 0.05 g of (NH₄)₂SO₄, 0.025 g of MgSO₄·7H₂O, 0.0002 g of MnSO₄·H₂O and 0.0002 g of FeSO₄·7H₂O.

In a preferred embodiment of the invention, the phosphate-solubilizing organisms consist of a pool of organisms exerting the action of solubilizing the phosphorus of the phosphate rock selected from, but without being limited to, *Bacillus licheniformis, Bacillus subtilis, Pseudomonas spp* and *Streptomyces spp* or mixtures thereof.

The aluminum-calcium phosphate rock used in the step i) of the method according to the invention preferably consists of aluminum-calcium rock, particularly variscite AlPO₄·2H₂O. Thus, by applying the method of the invention an end product containing at least a 22% of the phosphorus soluble from the solubilization of the aluminum-calcium rock carried out by the microorganisms is obtained.

To this respect, the method herein described allows the biological solubilization of apatites with a high yield as a result of the type of rock used, i.e., aluminum-calcium phosphate, because the traces of aluminum can favor the phosphorus-solubilizing microorganisms and other raw materials which favor the proliferation and action of the aerobic phosphorus-solubilizing microorganisms such that they are more efficient on this type of rock, as well as the supply of posidonia, which gives the composting mixture a foamy structure, favoring its aeration.

The insoluble phosphorus of the phosphate rock is also solubilized with this process because the action of the phosphorus-solubilizing microorganisms is favored by means of the supply of the nutrients necessary for increasing the solubilizing activity while at the same time increasing the multiplication and survival thereof, as well as improving the environmental conditions to favor this activity, controlling the humidity, temperature and oxygenation.

Another object of the present invention is the biological fertilizer obtained by means of the method described above, this fertilizer contains a high proportion of available phosphorus suitable for its use as an organic amendment in farming and forest soils and/or for being mixed with other materials for the purpose of obtaining an organo-mineral fertilizer. The biological fertilizer obtained by the method of the invention contains part of the phosphorus of the apatite already solubilized during composting step i) prior to obtaining the end product, but with an added value, which is the content of a certain number of microorganisms or their resistance forms, which are capable of creating symbiosis with plant roots, further favoring the survival and multiplication thereof. Therefore, both the phosphorus provided by the fertilizer and the phosphorus present in the soil will be available for the plant in a manner similar to a slow release, because the symbiosis created between the roots and the microorganisms makes it determine when the action of these microorganisms on the phosphate should increase in order to solubilize it and, accordingly, be available for the plant.

The fertilizer obtained according to the present method therefore includes a mixture of protein concentrate, aluminum-calcium phosphate rock, ferrous sulfate, posidonia, fresh manure, magnesium sulfate and seed inoculant, as defined above in the description of the step i). This fertilizer can further include bacterial cells, plant hormones and other plant growth-stimulating substances obtained concomitantly with the development of the method of the invention. The organic phosphorus-containing biological fertilizer obtained is therefore more efficient and has a higher agronomical value because it conserves certain units of the solubilizing microorganisms as well as their resistance forms in an organic fertilizer rich in phosphorus which extends the period of viability of said microorganisms.

## Claims

1. A method for obtaining a biological fertilizer with phosphorus from the apatite mineral solubilized by microorganisms, **characterized in that** it comprises the steps of:
i) obtaining a homogenous mixture from aluminum-calcium phosphate rock powder to which a protein concentrate, posidonia, fresh manure, magnesium sulfate and ferrous sulfate are added as degradable mineral raw materials which are a source of nitrogen, energy and minerals for the phosphate-solubilizing organisms, as well as the phosphate-solubilizing organisms themselves as seed inoculant, in addition to the water necessary for achieving humidity of 25-35%, the temperature both during the mixing process and of the mixture itself being maintained below 42°C;
ii) turning over the mixture obtained in i) for the purpose of maintaining the aerobic conditions, maintaining the minimum proportion of oxygen in the mixture at 5% to favor the development of the aerobic fermentation, as well as to cool the mixture, the periodicity of said turnovers depending on the temperature and oxygen conditions, maintained the temperature below 42°C;
iii) maintaining the mixture under the conditions mentioned in i) and ii) for a period of 90-120 days, depending on the desired phosphorus solubilization percentage, of 20-25% of the phosphorus of the apatite mineral, protecting the mixture under a suitable cover and being carried out on a surface which allows maintaining the mentioned humidity and temperature conditions;
iv) if necessary, adding the water necessary for maintaining a constant humidity of 25-35% to the mixture during composting steps i)-iii);
v) at the end of the composting process, the temperature is allowed to increase to a temperature greater than 65°C for at least 1 hour to remove possible pathogenic germs suppressing the turnovers.
vi) sieving the product obtained for its subsequent use forming part of another fertilizer, forming into pellets or direct use of the product.
the homogenous mixture of i) including 10%-20% aluminum-calcium phosphate rock, 5%-10% protein concentrate, 10%-30% posidonia, 15%-25% fresh manure, 3%-5% magnesium sulfate, 3%-5% ferrous sulfate, as well as 10%-15% of phosphate-solubilizing organisms seed inoculant.

2. The method according to claim 1, **characterized in that** the temperature of the homogenous mixture is maintained, by means of turning over, at a temperature between 37°C and 42°C.

3. The method according to claim 1, **characterized in that** the pH of the mixture of step i) ranges between 6-9, preferably between 7.2-8.

4. The method according to claim 1, **characterized in that** in the mixture of step i) fresh manure is replaced with purines and/or other sludge or primary waste from urban or farming waste as nutrients for the phosphate-solubilizing organisms.

5. The method according to claim 1, **characterized in that** in addition to fresh manure, purines and/or other sludge or primary waste from urban or farming waste are included in the mixture of step i) as nutrients for the phosphate-solubilizing organisms.

6. The method according to claim 1, **characterized in that** cellulose, lignin and pectin, CaCO₃, Na₂CO₃, Fe (III), NaCl, Na₂CO₃, Na2S04, CaCl₂, MgCl₂, KC1, KBr, SrCl₂, H₃BO₃, (NH₄)NO₃, Na2HP04, (NH₄)₂SO4, MgSO₄·7H₂O, MnSO₄·H₂O, FeSO₄·7H₂O are additionally incorporated in the mixture of step i).

7. The method according to claim 1, **characterized in that** the mixture of step i) includes at least 5 g of protein concentrate / 100 g of product to be composted.

8. The method according to claim 6, **characterized in that** the mixture of materials i) includes, for every 100 g of product to be composted, at least 5 g of cellulose, 10 g of lignin/pectin, 0.2 g of CaCO₃, 0.016 g of Na₂CO₃, 0.01 g of Fe (III), 2 g of NaCl, 0.016 g of Na₂CO₃, 0.32 g of Na₂SO₄, 0.180 g of CaCl₂, 0.088 g of MgCl₂, 0.055 g of KCl, 0.008 g of KBr, 3.4·10⁻³ g of SrCl₂, 2.2·10⁻³ g of H₃BO₃, 0.16·10⁻³ g of (NH₄)NO₃, 0.8·10⁻³ g of Na2HP04, 0.05 g of (NH₄)₂SO₄, 0.025 g of MgSO₄·7H₂O, 0.0002 g of MnSO₄·H₂O and 0.0002 g of FeSO₄·7H₂O.

9. The method according to claim 1, **characterized in that** the phosphate-solubilizing organisms consist of a pool of organisms exerting the action of solubilizing the phosphorus of the phosphate rock selected from *Bacillus licheniformis, Bacillus subtilis, Pseudomonas spp* and *Streptomyces spp* or mixtures thereof.

10. The method according to claim 1, **characterized in that** the aluminum-calcium phosphate rock used in step i) is aluminum-calcium rock, particularly variscite AlPO₄·2H₂O.

11. A biological fertilizer obtained according to the method described in claims 1 to 10, **characterized in that** it includes a mixture of protein concentrate, posidonia, fresh manure, magnesium sulfate, ferrous sulfate and phosphate-solubilizing organisms.

12. The biological fertilizer according to claim 11, **characterized in that** it contains at least 22% soluble phosphorus from the solubilization of the aluminum-calcium rock carried out by the microorganisms.

13. The biological fertilizer according to claims 11-12, **characterized in that** it further includes bacterial cells, plant hormones and plant growth-stimulating substances obtained concomitantly with the development of the method according to claims 1-10.

## Patentansprüche

1. Verfahren zum Erhalten eines biologischen Düngemittels mit Phosphor aus dem durch Mikroorganismen gelöstem Apatitmineral, **dadurch gekennzeichnet, dass** es folgende Schritte umfasst:
i) Erhalten einer homogenen Mischung aus Aluminium-Calcium-Phosphat-Gesteinspulver, der ein Proteinkonzentrat, Posidonia, Frischdung, Magnesiumsulfat und Eisensulfat als abbaubare mineralische Rohstoffe zugegeben werden, die eine Quelle für Stickstoff, Energie und Mineralstoffe für die phosphatlösenden Organismen sind, sowie aus den phosphatlösenden Organismen selbst als Saatgutimpfmittel, neben dem für das Erreichen einer Feuchtigkeit von 25-35 % erforderlichen Wasser, wobei die Temperatur sowohl während des Mischvorgangs als auch der Mischung selbst unter 42 °C gehalten wird;
ii) Umdrehen der in i) erhaltenen Mischung zum Zwecke der Aufrechterhaltung der aeroben Bedingungen, der Aufrechterhaltung des Mindestanteils an Sauerstoff in der Mischung auf 5 %, um die Entwicklung der aeroben Fermentation zu begünstigen, sowie der Kühlung der Mischung, wobei die Periodizität der Umdrehungen von der Temperatur und den Sauerstoffbedingungen abhängt, wobei die Temperatur unter 42 °C gehalten wird;
iii) Aufrechterhalten der Mischung unter den in i) und ii) genannten Bedingungen für einen Zeitraum von 90-120 Tagen, je nach gewünschtem Phosphorlöslichkeitsanteil, von 20-25 % des Phosphors des Apatitminerals, wobei die Mischung unter einer geeigneten Abdeckung geschützt wird und wobei dies auf einer Oberfläche, die die Aufrechterhaltung der genannten Feuchtigkeits- und Temperaturbedingungen ermöglicht, durchgeführt wird;
iv) gegebenenfalls Zugabe zur Mischung, während der Kompostierungsschritte i)-iii), des Wassers, das erforderlich ist, um eine konstante Feuchtigkeit von 25-35 % zu erhalten;
v) am Ende des Kompostierungsvorgangs lässt man die Temperatur für mindestens 1 Stunde auf eine Temperatur von mehr als 65 °C ansteigen, um eventuelle pathogene Keime zu entfernen, wobei die Umdrehungen ausbleiben.
vi) Sieben des erhaltenen Produkts für seine spätere Verwendung als Teil eines anderen Düngemittels, Pelletisierung oder Direktverwendung des Produkts,
wobei die homogene Mischung aus i) 10 %-20 % Aluminium-Calcium-Phosphat-Gestein, 5 %-10 % Proteinkonzentrat, 10 %-30 % Posidonia, 15 %-25 % Frischdung, 3 %-5 % Magnesiumsulfat, 3 %-5 % Eisensulfat sowie 10 %-15 % phosphatlösende Organismen als Saatgutimpfmittel beinhaltet.

2. Verfahren nach Anspruch 1, **dadurch gekennzeichnet, dass** die Temperatur der homogenen Mischung durch Umdrehen auf einer Temperatur zwischen 37 °C und 42 °C gehalten wird.

3. Verfahren nach Anspruch 1, **dadurch gekennzeichnet, dass** der pH-Wert der Mischung aus Schritt i) zwischen 6-9, vorzugsweise zwischen 7,2-8 liegt.

4. Verfahren nach Anspruch 1, **dadurch gekennzeichnet, dass** in der Mischung aus Schritt i) der Frischdung durch Gülle und/oder andere Schlämme oder Primärabfälle aus städtischen oder landwirtschaftlichen Abfällen als Nährstoffe für die phosphatlösenden Organismen ersetzt wird.

5. Verfahren nach Anspruch 1, **dadurch gekennzeichnet, dass** neben Frischdung auch Gülle und/oder andere Schlämme oder Primärabfälle aus städtischen oder landwirtschaftlichen Abfällen in die Mischung aus Schritt i) als Nährstoffe für die phosphatlösenden Organismen aufgenommen werden.

6. Verfahren nach Anspruch 1, **dadurch gekennzeichnet, dass** Cellulose, Lignin und Pektin, CaCO₃, Na₂CO₃, Fe (III), NaCl, Na₂CO₃, Na₂SO₄, CaCl₂, MgCl₂, KCl, KBr, SrCl₂, H₃BO₃, (NH₄)NO₃, NB₂HPO₄, (NH₄)₂SO₄, MgSO₄·7H₂O, MnSO₄·H₂O, FeSO₄·7H₂O zusätzlich in die Mischung aus Schritt i) eingebracht werden.

7. Verfahren nach Anspruch 1, **dadurch gekennzeichnet, dass** die Mischung aus Schritt i) mindestens 5 g Proteinkonzentrat / 100 g zu kompostierendes Produkt beinhaltet.

8. Verfahren nach Anspruch 6, **dadurch gekennzeichnet, dass** die Materialmischung i) je 100 g des zu kompostierenden Produkts mindestens 5 g Cellulose, 10 g Lignin/Pektin, 0,2 g CaCO₃, 0,016 g Na₂CO₃, 0,01 g Fe (III), 2 g NaCl, 0,016 g Na₂CO₃, 0,32 g Na₂SO₄, 0,180 g CaCl₂, 0,088 g MgCl₂, 0,055 g KCl, 0,008 g KBr, 3,4·10⁻³g SrCl₂, 2,2·10⁻³g H₃BO₃, 0,16·10⁻³g (NH₄)NO₃, 0,8·10³g NB₂HPO₄, 0,05 g (NH₄)₂SO₄, 0,025 g MgSO₄·7H₂O, 0,0002 g MnSO₄·H₂O und 0,0002 g FeSO₄·7H₂O beinhaltet.

9. Verfahren nach Anspruch 1, **dadurch gekennzeichnet, dass** die phosphatlösenden Organismen aus einem Pool von Organismen bestehen, die die Lösewirkung des Phosphors aus dem Phosphatgestein ausüben, ausgewählt aus *Bacillus licheniformis, Bacillus subtilis, Pseudomonas spp* und *Streptomyces spp* oder Mischungen davon.

10. Verfahren nach Anspruch 1, **dadurch gekennzeichnet, dass** das in Schritt i) verwendete Aluminium-Calcium-Phosphat-Gestein ein Aluminium-Calcium-Gestein, insbesondere Varizit AlPO₄·2H₂O, ist.

11. Biologisches Düngemittel, das nach dem in den Ansprüchen 1 bis 10 beschriebenen Verfahren erhalten wird, **dadurch gekennzeichnet, dass** es eine Mischung aus Proteinkonzentrat, Posidonia, Frischdung, Magnesiumsulfat, Eisensulfat und phosphatlösenden Organismen beinhaltet.

12. Biologisches Düngemittel nach Anspruch 11, **dadurch gekennzeichnet, dass** es mindestens 22 % löslichen Phosphor aus der von den Mikroorganismen durchgeführten Lösung des Aluminium-Calcium-Gesteins enthält.

13. Biologisches Düngemittel nach den Ansprüchen 11-12, **dadurch gekennzeichnet, dass** es ferner Bakterienzellen, Phytohormone und pflanzenwachstumsstimulierende Substanzen beinhaltet, die gleichzeitig mit dem Ablauf des Verfahrens nach den Ansprüchen 1-10 erhalten wurden.

## Revendications

1. Procédé pour l'obtention d'un engrais biologique avec du phosphore du minéral d'apatite solubilisé par des microorganismes, **caractérisé en ce qu'**il comprend les étapes consistant à :
i) obtenir un mélange homogène à partir de poudre de roche phosphatée d'aluminium-calcium à laquelle un concentré de protéines, la posidonie, du fumier frais, du sulfate de magnésium et du sulfate ferreux sont ajoutés comme matériaux bruts minéraux dégradables qui sont une source d'azote, d'énergie et de minéraux pour les organismes solubilisant le phosphate, ainsi que les propres organismes solubilisant le phosphate comme inoculant à semence, outre l'eau nécessaire pour obtenir l'humidité de 25-35 %, la température pendant le procédé de mélange et du propre mélange étant maintenue en dessous de 42 °C ;
ii) retourner le mélange obtenu à l'étape i) dans le but de maintenir les conditions aérobies, maintenir le pourcentage minimum d'oxygène dans le mélange à 5 % pour favoriser le développement de la fermentation aérobie, ainsi que pour refroidir le mélange, la périodicité desdits retournements dépendant des conditions de température et d'oxygène, la température étant maintenue en-dessous de 42 °C ;
iii) maintenir le mélange dans les conditions mentionnées dans i) et ii) pour une période de 90-120 jours, en fonction du pourcentage de solubilisation du phosphore voulu, de 20-25 % du phosphore du minéral d'apatite, protéger le mélange sous un couvercle adapté et réaliser sur une surface qui permet de maintenir l'humidité mentionnée et les conditions de température ;
iv) si nécessaire, ajouter l'eau nécessaire pour maintenir une humidité constante de 25-35 % au mélange pendant les étapes de compostage i)-iii) ;
v) à la fin du procédé de compostage, la température peut monter à une température supérieure à 65 °C pendant au moins 1 heure pour retirer de possibles germes pathogènes supprimant les retournements.
vi) tamiser le produit obtenu pour son utilisation ultérieure faisant partie d'un autre engrais, former des pellets ou utiliser directement le produit.
le mélange homogène de i) comportant 10 %-20 % de roches de phosphate d'aluminium-calcium, 5 %-10 % de concentré de protéines,10 %-30 % de posidonie, 15 %-25 % de fumier frais, 3 %-5 % de sulfate de magnésium, 3 %-5 % de sulfate ferreux, ainsi que 10%-15 % d'inoculant de semence d'organismes solubilisant le phosphate.

2. Procédé selon la revendication 1, **caractérisé en ce que** la température du mélange homogène est maintenue, au moyen du retournement, à une température entre 37 °C et 42 °C.

3. Procédé selon la revendication 1, **caractérisé en ce que** le pH du mélange de l'étape i) est compris entre 6-9, de préférence entre 7,2-8.

4. Procédé selon la revendication 1, **caractérisé en ce que** dans le mélange de l'étape i) le fumier frais est remplacé par des purines et/ou autres boues ou résidus primaires issus des déchets urbains ou agricoles comme nutriments pour les organismes solubilisant le phosphate.

5. Procédé selon la revendication 1, **caractérisé en ce qu'**outre le fumier frais, les purines et/ou autres boues ou résidus primaires issus des déchets urbains ou agricoles sont inclus dans le mélange de l'étape i) comme nutriments pour les organismes solubilisant le phosphate.

6. Procédé selon la revendication 1, **caractérisé en ce que** la cellulose, la lignine et la pectine, CaCO₃, Na₂CO₃, Fe (III), NaCl, Na₂CO₃, Na₂SO₄, CaCl₂, MgCl₂, KCl, KBr, SrCl₂, H₃BO₃, (NH₄)NO₃, NB₂HPO₄, (NH₄)₂SO₄, MgSO₄·7H₂O, MnSO₄·H₂O, FeSO₄·7H₂O sont incorporés en outre dans le mélange de l'étape i).

7. Procédé selon la revendication 1, **caractérisé en ce que** le mélange de l'étape i) comporte au moins 5 g de concentré de protéines / 100 g de produit à composter.

8. Procédé selon la revendication 6, **caractérisé en ce que** le mélange de matériaux i) comporte, pour tous les 100 g de produit à composter, au moins 5 g de cellulose, 10 g de lignine/pectine, 0,2 g de CaCO₃, 0,016 g de Na₂CO₃, 0,01 g de Fe (III), 2 g de NaCl, 0,016 g de Na₂CO₃, 0,32 g de Na₂SO₄, 0,180 g de CaCl₂, 0,088 g de MgCl₂, 0,055 g de KCl, 0,008 g de KBr, 3,4·10⁻³ g de SrCl₂, 2,2·10⁻³ g de H₃BO₃, 0,16·10⁻³ g de (NH₄)NO₃, 0,8·10⁻³ g de NB₂HPO₄, 0,05 g de (NH₄)₂SO₄, 0,025 g de MgSO₄·7H₂O, 0,0002 g de MnSO₄·H₂0 et 0,0002 g de FeSO₄·7H₂O.

9. Procédé selon la revendication 1, **caractérisé en ce que** les organismes solubilisant le phosphate consistent en un pool d'organismes exerçant l'action consistant à solubiliser le phosphore de la roche phosphatée choisie parmi *Bacillus licheniformis, Bacillus subtilis, Pseudomonas spp* et *Streptomycesspp* ou des mélanges de ces dernières.

10. Procédé selon la revendication 1, **caractérisé en ce que** la roche phosphatée d'aluminium-calcium utilisée à l'étape i) est la roche d'aluminium-calcium, en particulier la variscite AlPO₄-2H₂O.

11. Engrais biologique obtenu selon le procédé décrit dans les revendications 1 à 10, **caractérisé en ce qu'**il comporte un mélange de concentré de protéines, la posidonie, du fumier frais, du sulfate de magnésium, du sulfate ferreux et des organismes solubilisant de phosphate.

12. Engrais biologique selon la revendication 11, **caractérisé en ce qu'**il contient au moins 22 % de phosphore soluble issu de la solubilisation de la roche d'aluminium-calcium réalisée par les microorganismes.

13. Engrais biologique selon les revendications 11-12, **caractérisé en ce qu'**il comporte en outre des cellules bactériennes, des hormones végétales et des substances stimulant la croissance végétale obtenues parallèlement avec le développement du procédé selon les revendications 1-10.
